# EUROPEAN PATENT SPECIFICATION

(11) **EP 3 162 956 B1**
(45) Date of publication and mention of the grant of the patent: **13.03.2019**
(21) Application number: 16192228.1
(22) Date of filing: 04.10.2016
(51) Int. Cl.: D21F 11/00, D21G 9/00

(54) **FEED SYSTEM OF A FIBER WEB MACHINE**
ZUFÜHRSYSTEM EINER MASCHINE ZUR HERSTELLUNG EINER FASERSTOFFBAHN
SYSTÈME D'ALIMENTATION D'UNE MACHINE DE FABRICATION D'UNE BANDE DE MATÉRIAU FIBREUX

(30) Priority: 30.10.2015 FI 20155771
(43) Date of publication of application: 03.05.2017
(73) Proprietor: Valmet Technologies Oy, 02150 Espoo (FI)
(72) Inventor: HILDEN, Pekka, 40900 Säynätsalo (FI); LUHTAMÄKI, Vesa, 40640 Jyväskylä (FI); CECCHINI, Juan, 40520 Jyväskylä (FI)
(74) Representative: TBK

(56) References cited:
- WO-A1-2014/128358
- US-B1- 6 355 142

## Description

The invention relates to a feed system of a fiber web machine, which system includes:
- a feed line for taking stock towards a headbox of a fiber web machine,
- foam generation equipment adapted in the feed line for the feeding of one or more agents into the stock for foam forming.

Foam forming performed on the fiber web machine is known from prior art. Foam forming can also be called foam web formation. In foam forming, one or more agents are added to the stock, which is intended to be formed into a web and which is fed into the headbox, for example in the short circulation of the fiber web machine for the implementation of foam forming. The agents added can include foaming agents such as air and antifoaming agents. Surface active agents can be mentioned as an example of antifoaming agents. These can be used for controlling foam generation for example by adjusting the bubble size. By changing the mutual ratio of these agents, the goal is to obtain the desired type of foam generation, web formation and/or the properties of the end product produced. with regard to prior art, reference is made to the international patent application publication WO 2014/128358 A1.

The purpose of the present invention is to accomplish a feed system of a fiber web machine, where it is possible to adjust the amount of one or more agents affecting foam generation in the stock to be formed into a web. The characteristics of the system according to the invention are presented in claim 1.

The feed system according to the invention includes measuring equipment for determining the density of the stock, adapted in the feed line before and after the foam generation equipment, and in addition to the measuring equipment also control equipment, which has been adapted, on the basis of the determination of density, to control the foam generation equipment for the feeding of one or more agents into the stock for foam forming.

In the invention, the density of the stock has been adapted to be determined before and after foam generation. On the basis of these determinations, it is possible to adjust the feeding of one or more agents that affect foam generation, and hence to affect foam generation, web formation in the headbox and/or the properties of the end product to be formed into a web in a more effective and controlled manner.

According to one embodiment, the measuring equipment for the measurement of density has been adapted in the feed line before the feeding of one or more agents into the stock for foam forming. In this case, it is possible to determine the amount of foam contained in the stock before the feed line. On the basis of this information, it is possible to dose the agents, which affect foam generation, in a purposeful manner. This improves the formation of the stock into a web, affects the properties of the end product to be formed into a web and also saves the agents, which are dosed into the stock and which affect foam generation. Correspondingly, by means of the measuring equipment adapted after the foam generation equipment it is possible to find out the effect of the agents, which are dosed into the stock in the feed line and which affect foam generation, on the density of the stock. On the basis of measurement carried out before and after the foam generation equipment, foam generation can be controlled precisely, which has an effect on the above-mentioned factors.

The feed system can also include a bypass line in order to arrange bypass to the headbox. According to one embodiment, the measuring equipment adapted after the foam generation equipment for the determination of the density of the stock can be adapted in the bypass line. The arrangement of the measuring equipment in the bypass line provides a simple way to arrange the measurement after foam generation, because there is typically more space available in the bypass line than in the feed line before the headbox. Moreover, measurement carried out in the bypass line correlates with the headbox density of the stock at a reasonable accuracy. Measurement carried out in the bypass line indicates issues such as the permanence of foam in the stock to be formed into a web.

Moreover, density measurement carried out in the bypass line enables the determination of the amount of stock air content that has travelled through the headbox, which amount affects issues such as the formation and bulk of the web. Measurement carried out in the bypass line indicates the air content of the foamed stock to be formed into a web in the headbox, which air content in practice corresponds to or is at least proportionate to the air content of the stock fed from the headbox to the forming section and hence also corresponds to or is proportionate to the formation and bulk of the web formed. On the basis of this determination and by comparing this also to corresponding measurement carried out in the feed line, before foam generation, it is possible to adjust the feeding of the agents affecting foam generation before the headbox in the feed line. Moreover, as a result of the invention it is also possible to adjust the feeding of one or more surface active agents for example so as to achieve a desired bubble size in web formation. Instead of or in addition to the bypass line, the measuring equipment adapted after the foam generation equipment can also be located as early as before the headbox for example in the feed line and/or in the headbox itself. These are possible especially if there is no bypass in the headbox.

According to one embodiment, the measuring equipment adapted in the feed line can be between the pump belonging to the feed line and the foam generation equipment. The pump is used for mixing stock, which has been brought into a wire pit, into tail water. In this case, the measuring equipment adapted after the pump but before the foam generation equipment can be used for finding out the density of the stock to be formed into a web, composed of several components, which density is affected for example by the foam coming with the tail water. On the basis of this determination, the foam generation equipment adapted in the feed line can be used for adjusting the density of the stock to the desired direction.

According to one embodiment, the measuring equipment adapted in the feed line has been adapted between the pump and a machine screen also included in the feed line. This location simplifies the arrangement of the measurement and is often advantageous from the point of view of the space required by the measurement.

According to one embodiment, density can be measured also in the dilution water system. This can take place for example in the bypass line of the dilution water system. In this way, the density of the dilution water flow fed into the headbox using the dilution water system can be adjusted in the desired manner in relation to the density of the main flow fed into the headbox.

According to yet another embodiment, a small side flow can be taken from the feed and/or bypass lines for the determination of density, from which side flow density can be measured. The pipe size of the side flow is smaller than the pipe size of the actual main flow, in which case the arrangement of density measurement using existing measuring devices is challenging. This simplifies the arrangement of density measurement in the feed system. The other additional advantages to be achieved with the invention are disclosed in the description of the invention, and the characteristics are disclosed in the claims.

The invention, which is not restricted to the embodiments presented below, is described in more detail by making reference to the enclosed drawings, in which:
- Figure 1: shows one example in principle of the feed system of a fiber web machine as a schematic diagram,
- Figure 2: shows one embodiment in principle of the arrangement of measurement in connection with a pipeline, and
- Figure 3: shows one embodiment in principle of the arrangement of measurement in a tank.

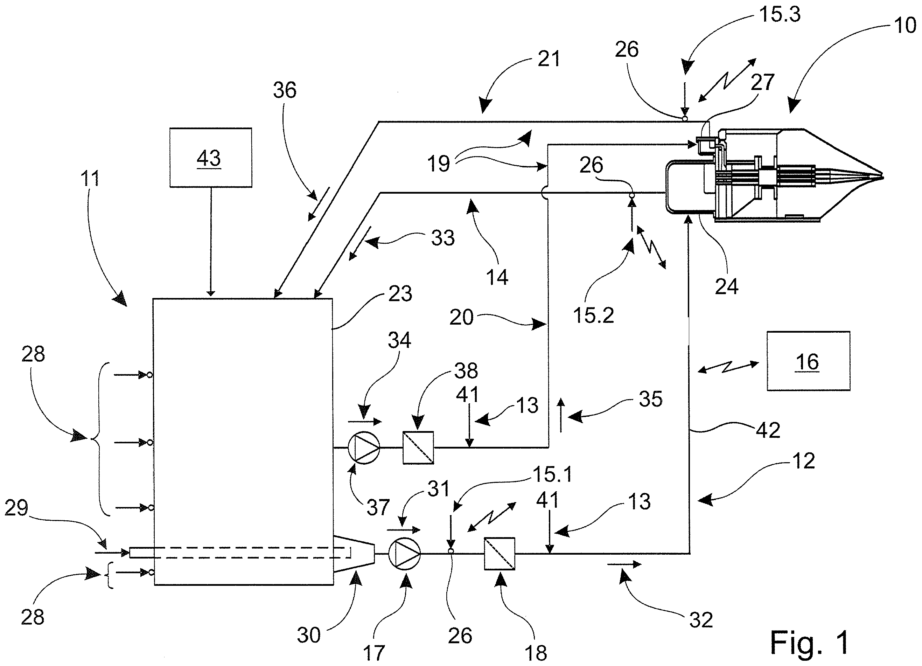

Figure 1 shows an example in principle of a feed system of a fiber web machine as a schematic diagram, where the feed system is connected to a headbox 10 of a fiber web machine. The main parts of the feed system of the fiber web machine are a feed line 12, potential bypass line 14 and foam generation equipment 13 for the foam forming of stock 31 in the headbox 10, more generally on the fiber web machine.

The feed system can be connected to production equipment 11 for the production of stock 31 intended to be formed into a web in the headbox 10 from one or more thick stock components 29 and from filtrate 43. The production equipment 11 can be known as such from prior art. In Figure 1, only a wire pit 23 is illustrated of the production equipment 11. For a person having ordinary skill in the art, it is obvious that the production equipment 11 can include a large number of other equipment known as such and familiar to a person having ordinary skill in the art, which other equipment is not illustrated in Figure 1.

At least one thick stock component 29 is brought into the wire pit 23 from the production equipment (not illustrated) preceding the wire pit 23. The thick stock component 29 is fed into the wire pit 23 through a connection arranged near its bottom, and led into the wire pit 23. The thick stock component 29 can be discharged into the wire pit 23 near its outlet connection 30. Filtrates 43 can be brought into the wire pit 23 from several sources known as such. One example are waters removed from the web on the forming section following the headbox 10 of a fiber web machine. The filtrates 43 can also include other waters coming from the fiber web machine. A potential bypass of the headbox 10 and a potential bypass of the dilution water of the headbox 10 are also led into the wire pit 23. Moreover, filtrates can be brought from the production equipment preceding the wire pit 23. As a result of the wire pit 23, the feed system according to the invention can be part of the short circulation of the fiber web machine.

In the feed line 12, stock 31 is taken towards the headbox 10 of the fiber web machine. The feed line 12 is connected to the stock 31 production equipment 11, now especially to the wire pit 23, to an outlet connection 30 adapted in its lower part. The feed line 12 is composed of at least one pipeline 42 adapted to lead the flow, to which pipeline 42 various equipment has been connected. The equipment can be known as such from prior art. In the case according to the embodiment, the equipment and hence also the feed line 12 includes a headbox 10 feed pump 17 and machine screen 18 adapted after the production equipment 11, more specifically after the wire pit 23.

Foam generation equipment 13 has been adapted in the feed line 12. The foam generation equipment 13 adapted in the feed line 12 has been adapted for example for the feeding of one or more agents 41 into the stock 31 for foam forming. In this case, the foam generation equipment 13 can include for example an agent source and an actuator such as a valve for the dosing of the agent 41 from the agent source into the feed line 12. The feed line 12 has a connection, through which the agent 41 is dosed into the pipeline 42. The technology related to this can also be known as such from prior art. Moreover, the foam generation equipment 13 can also include mixing equipment for the mixing of the agents 41 into the stock 31 and/or for foam generation. These can also be adapted in the feed line 12.

The agents 41 to be dosed into the feed line 12 can also be known as such from prior art. Foam can be generated using one or more agents 41. The agent can be for example a gas such as air. On the other hand, foam generation can be restrained for example by means of one or more surface active agents. These can be used for controlling the bubble size. These one or more agents that control foam generation are also dosed into the feed line 12 using foam generation equipment 13. There can be several units of foam generation equipment 13 in the feed line 12, and they can be separate from one another. There can be separate equipment for each agent. On the other hand, the adding of several agents can also take place using the same equipment.

The headbox 10 can be known as such from prior art. It can be for example a headbox 10 based on a turbulence generator. The stock 32 to the formed into a web discharges from the slice opening of the headbox 10 to the forming section of the fiber web machine. The stock 32 to the formed into a web is distributed over the entire width of the headbox 10 in the cross direction of the machine by means of a header 24 in a manner known as such. The feed line 12 is connected to the wider end of the header 24 for the feeding of the stock 32 to the formed into a web into the headbox 10.

Correspondingly, an optional bypass line 14 for the stock 33 can be connected to the opposite end of the header 24, which end can also be narrower than the wider end, for the arrangement of bypass to the headbox 10. The bypass line 14 can also be part of the feed system. In the bypass line 14, the stock 33, which has flown through the header 24 of the headbox 10 and which has not yet ended up in web formation, is led from the headbox 10 of the fiber web machine back to the stock 31 production equipment 11, here more specifically into the wire pit 23, or more generally back to the feed system. The bypass line 14 can also be referred to as the bypass of the headbox 10. However, it is to be noted here that the headbox 10 can also be without bypass, in other words without the bypass line 14 illustrated in Figure 1.

The system includes measuring equipment 15.1, 15.2 for the determination of the density of the stock 31, 33. Moreover, the system also includes control equipment 16 for the controlling of foam generation. Measuring equipment 15.1 has been adapted in the feed line 12 before the foam generation equipment 13 adapted in the feed line 12. Moreover, measuring equipment 15.2 has also been adapted after the foam generation equipment 13. The control equipment 16 has been adapted to control the foam generation equipment 13 for the foam forming of the stock 31 on the basis of the density determination performed using the measuring equipment 15.1, 15.2. More specifically, the control equipment 16 has been adapted to control the foam generation equipment 13 for the feeding of one or more agents 41 into the stock 31 for foam forming on the basis of the density determination performed using the measuring equipment 15.1, 15.2. In this way, it is possible to control and optimize foam generation from the point of view of both foam forming and the properties of the end product. The control equipment 16 can be part of the machine control automation, which has been adapted to operate for example in a pre-controlled manner. The control equipment 16 is used for controlling for example the operation of valves included in the foam generation equipment 13, with which valves the feeding of the agents is controlled. Moreover, the control equipment 16 can also be used for controlling the operation of potential mixing equipment affecting foam generation.

The measuring equipment 15.1 has been adapted in the feed line 12 before the foam generation equipment 13 for the feeding of one or more agents 41 into the stock 31 for foam forming. In this way, it is possible to find out the state of the foam generation of the stock 31 coming from the production equipment 11 and intended to be formed into a web without the agents 41 affecting foam generation yet fed into the stock 31 in the feed line cycle in question.

In the case according to the embodiment, measuring equipment 15.2 has also been adapted in the bypass line 14 for the determination of the density of the stock 33 after the foam generation equipment 13. Density measurement carried out in the bypass line 14, in other words in the bypass of the headbox 10, or more generally measuring equipment 15.2 adapted after the foam generation equipment 13 can be used, in turn, for determining the air content, in other words the amount of foam. This has an effect on issues such as the formation and bulk of the web. Measurement carried out in the bypass indicates the air content of the foamed stock 32 fed into the headbox 10 and formed into a web. In practice, the result of the measurement carried out in the bypass line corresponds to or is at least proportionate to the air content of the stock fed from the headbox 10 to the forming section and hence also corresponds to or is proportionate to the formation and bulk of the web formed. The cycle time of short circulation is typically approximately 10 seconds, so the foam has to endure that time. Measurement carried out in the bypass line 14 indicates this.

On the other hand, this measurement carried out after the foam generation equipment 13 can be performed before the headbox 10 or even in the headbox 10 itself. In this way, density measurement carried out after the foam generation equipment 13 is not restricted to this presented measurement carried out in the bypass after the headbox 10, but the carrying out of the measurement before the headbox 10 (in the foamed stock 32 to be formed into a web) or even in the headbox itself (for example in the header 24) is also possible.

On the basis of the measurement carried out in the feed and bypass line 12, 14, it is possible to adjust the foam generation of the stock 32 intended to be formed into a web to the desired direction. The density of the stock fed into the headbox 10 can be found out and it can be adjusted by means of a system, where the density of the stock circulating in the feed system belonging to the short circulation is measured before and after the headbox 10, and more generally, before and after foam generation, at sufficient accuracy. This information and its accuracy are relevant so that the jet speed of the headbox 10 can be adjusted reliably. The accuracy requirement for the measurement can be for example 1% or even below it. Moreover, the system is also used for obtaining information on how the foam circulates in the short circulation, whether there is enough foam, whether the quality of the foam is good (does not cause splashing) and information on other matters related to foam generation.

One way of arranging the measuring equipment 15.1 in the feed line 12 before the foam generation equipment 13 is to adapt it between the pump 17 arranged for the feeding of the headbox 10 of the fiber web machine, belonging to the feed line 12, and the foam generation equipment 13. The pump 17 follows the production equipment 11, in other words in this case the wire pit 23. The pump 17 is used for mixing the thick stock component 29 and the tail water, in which case density measurement carried out after this but before the foam generation equipment 13 gives a correct view of the air content before foam generation.

More specifically, in addition to the pump 17 the feed line 12 can also include a machine screen 18 arranged after the pump 17. Like the pump 17, the machine screen 18 is in the feed line 12 before the foam generation equipment 13. In this case, the measuring equipment 15.1 adapted in the feed line 12 before foam generation equipment 13 can be adapted between the pump 17 and the machine screen 18. In this case, too, a correct view is obtained of the air content before foam generation, and this is also an advantageous embodiment in respect of the use of space, if the foam generation equipment 13 follows the machine screen 18 after a short distance.

The system can also include a dilution water system 19. Its operation and purpose as such are familiar to a person having ordinary skill in the art. In this case, the dilution water system 19 includes feed and bypass lines 20, 21 in the corresponding manner. The feed line 20 of dilution water has a feed pump 37 of dilution water 34 and a screen 38 of dilution water 34 following the feed pump 37.

There is a specific header 27 for dilution water 35 in the headbox 10. The feeding of dilution water 35 from the header 27 into the main flow of the headbox 10 can be implemented in a selected manner. The feed line 20 of the dilution water system 19 can also include foam generation equipment 13 for the feeding of one or more agents 41 into the dilution water 34 for foam forming. The foam generation equipment 13 can be after the pump 37 and screen 38 adapted in the feed line 20 of dilution water.

The dilution water system 19 can also include measuring equipment 15.3 for the measurement of the density of dilution water 36. The measuring equipment 15.3 can be adapted in the dilution water system 19 in its bypass line 21. In this case, the measuring equipment 15.3 is in the dilution water system 19 after the foam generation equipment 13 included in the dilution water system 19. The feed line 20 of the dilution water system 19 is now connected to the corresponding part of the production equipment 11 as to which the feed line 12 of the stock 31 is connected. This part of the production equipment 11, to which part at least one of the feed lines 12, 20 is connected, is now a wire pit 23.

It can be said that the headbox density is the difference in density between the stock 32, which is led to the headbox 10 and formed into a web, and dilution water 35. For example orientation problems are reduced by means of density measurement carried out in the dilution water system 19. orientation problems may be caused if the density of the dilution water and the density of the stock to be formed into a web do not differ from each other sufficiently. As a result of the measurement, the density of the dilution water can be adjusted to be optimal, in which case the targeted advantages can be achieved with it.

The measuring equipment 15.1 - 15.3 includes at least one radioactive measuring device 26, which can be known as such. One example is a densitometer of Berthold Technologies based on radioactive radiation. The densitometer can be installed easily to measure the stock traveling in the pipeline. In these, radiation is typically used for measuring the mass of the stock traveling through the measuring device 26, and the density of the stock can be calculated from the mass.

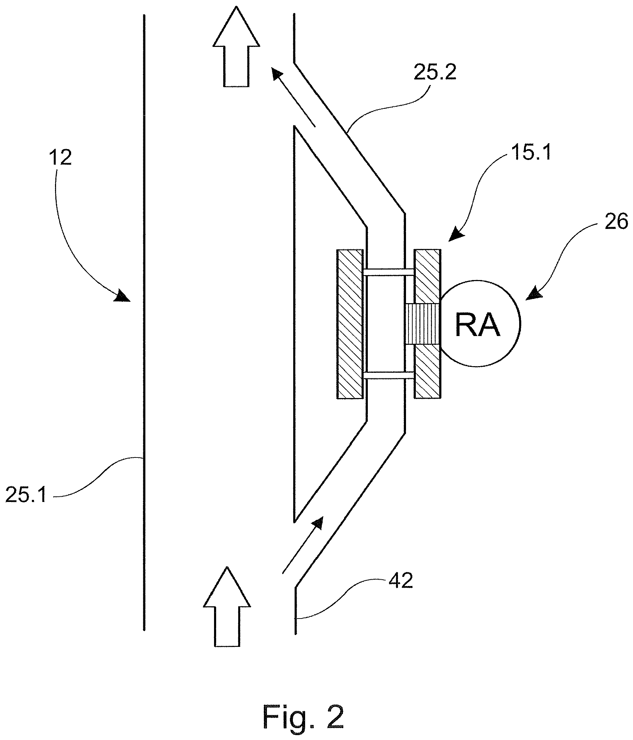

Figure 2 shows one solution in principle of the arrangement of measurement in connection with a pipeline 42, such as specifically a feed line 12 and/or bypass line 14. The solution presented is suited especially to the measurement of the density of stock in pipelines 42 with a large diameter. Since the diameter of these pipelines 42 can be several hundred millimeters, such as more than 300 mm, this sets its own challenge to the measurement of the density of stock and hence to the determination of foam generation in respect of the arrangement of the measuring equipment 15.1, 15.2. In paper and board production environments, these types of pipeline sizes are very typical for example in taking the stock to the headbox 10 and also in implementing its bypass. The adding of agents 41, which affect foam generation, into the stock 31 typically takes place in connection with these large pipelines 42.

One simple solution to this is to divide the flow of the feed and/or bypass line 12, 14 into two partial flows, as shown in Figure 2, which partial flows travel in their own channels 25.1, 25.2. One of the two partial flows has been arranged to travel in the channel 25.2 with an essentially smaller diameter. An example of the diameter of this smaller channel 25.2 can be 75 - 100 mm. The diameter of the main line channel 25.1 can be more than 300 mm. The velocity of the flow has no effect on the measurement. The measurement works well, because the stock in the pipeline is pressurized to a pressure over the atmospheric pressure.

It is easier to arrange measuring equipment 15.1 in the channel 25.2 with a small diameter than in the larger main line. The measuring equipment 15.1 can again be a radioactive measuring device 26. Due to the smaller channel 25.2, it is possible to carry out the density measurement using commercial instruments which are easily available. In this case, they do not need to be specifically tailored for the considerably larger main line 25.1. The relatively larger main line 25.1 would require measuring equipment corresponding to its own dimensioning, or it might even be impossible to carry out the measurement in it reliably.

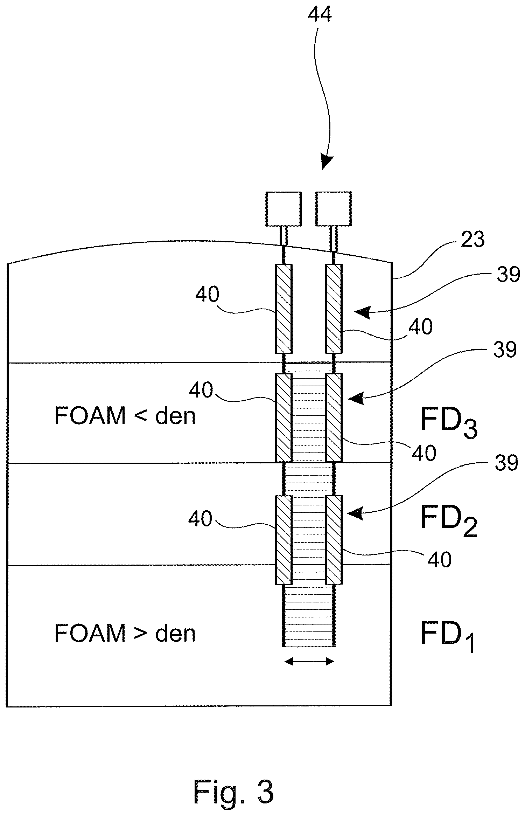

Figure 3 shows one possible way to measure density in a volume, in other words in a tank. The example presents a wire pit 23. In the foam forming process, the density of the stock changes in the vertical direction of the wire pit 23. The liquid/foam in the tank stratifies depending on consumption. In this case, there is thicker material on the bottom of the wire pit 23, while the foam content at the upper part of the tank is greater, in other words there is material with a smaller density. In terms of the operation of the pumps 17, it is good to know the density of the liquid coming to the pumps.

In this embodiment, the measurement of density is based on the measurement of the conductivity of the material. Sensors 39 based on the measurement of conductivity have been adapted at different heights in the wire pit 23, and the sensors 39 have been adapted to measure the density FD₁,...,FD₃ of each layer.

Each sensor 39 can have two parallel electrode plates 40 side by side within a set distance from each other. when an electric current is connected to the plates 40 and when the surface area of the plates is known, the electrical conductivity of the material between the plates is found out using a method known as such. Electrical conductivity, in turn, is proportional to the density of the material between the electrodes 40. The electrodes 40 have been connected to measurement electronics 44. The measurement can be carried out using direct current and also alternating current. In layer determination, two or more sensors can be used instead of one sensor 39. In this case, the density of the material in the area of the sensors 39 (in a layer to be determined) can be found out by combining the measurement results of the sensors (for example average).

In Figure 1, the density measurement of the wire pit 23 is denoted by reference number 28. In this embodiment, hydrostatic pressure can be measured for example at intervals of one meter. In this case, the layer density can be calculated at a resolution of one meter. Now the tank 23 has four pressure gages 28. The layer to be measured is formed between the pressure gages. The density of each layer can be calculated from the difference in the readings of the pressure gages.

The density of the stock 31 that is in the wire pit 23 and that is taken from the wire pit 23 to the feed line 12 affects the duty point of the pump 17. Density measurement indicates whether the pump 17 is at its duty point or going away from it. In this case, it is possible to adjust the revolutions or counter pressure of the pump 17 controlled by a frequency converter and to return the pump 17 to the correct duty point. In foam forming, the control curve of a pump 17 run with water works poorly, if the density of the stock 31 decreases significantly.

In the context of the invention, the fiber web machine can refer for example to a paper, board and tissue machine as well as pulp drying machine.

It is to be understood that the above description and the related figures are only intended to illustrate the present invention. The invention is hence not only restricted to the above-presented embodiments or to the embodiments defined in the claims, but several different variations and adaptations of the invention will also be obvious to a person having ordinary skill in the art, which variations and adaptations are possible within the inventive idea defined by the enclosed claims.

The invention relates to a feed system of a fiber web machine, which feed system includes a feed line (12) for taking stock (31) towards a headbox (10) of a fiber web machine, and foam generation equipment (13) adapted in the feed line for the feeding of one or more agents (41) into the stock for foam forming. The feed system further includes measuring equipment (15.1, 15.2) for determining the density of the stock (31, 32, 33), adapted in the feed line before and after the foam generation equipment, and control equipment (16), which has been adapted, on the basis of said determination of density, to control the foam generation equipment for the feeding of one or more agents into the stock for foam forming.

## Claims

1. A feed system of a fiber web machine, including:
- a feed line (12) for taking stock (31) towards a headbox (10) of a fiber web machine,
- foam generation equipment (13) adapted in the feed line (12) for the feeding of one or more agents (41) into the stock (31) for foam forming, **characterized in that** the feed system further comprises:
- measuring equipment (15.1) for the determination of the density of the stock (31) adapted in the feed line (12) before the foam generation equipment (13) and measuring equipment (15.2) for the determination of the density of stock (33) adapted after the foam generation equipment (13),
- control equipment (16), which is adapted to control the foam generation equipment (13) for the feeding of one or more agents (41) into the stock (31) for foam forming on the basis of said density determination.

2. A system according to claim 1, **characterized in that** the feed system also includes a bypass line (14) for an arrangement of a bypass of the headbox (10), to which bypass line (14) the measuring equipment (15.2) for the determination of the density of the stock (33) after the foam generation equipment (13) is adapted.

3. A system according to claim 1 or 2, **characterized in that** the feed line (12) includes a pump (17), and the measuring equipment (15.1) adapted in the feed line (12) before the foam generation equipment (13) is adapted between the pump (17) and the foam generation equipment (13).

4. A system according to claim 3, **characterized in that** the feed line (12) further includes a machine screen (18), and the measuring equipment (15.1) adapted in the feed line (12) before the foam generation equipment (13) is adapted between the pump (17) and the machine screen (18).

5. A system according to any one of claims 1 - 4, **characterized in that** the system further includes a dilution water system (19) with its feed and bypass lines (20, 21), where a measuring equipment (15.3) for measurement of the density of a dilution water is adapted in the bypass line (21) of the dilution water system (19).

6. A system according to any one of claims 1 - 5, **characterized in that** the measuring equipment (15.1 - 15.3) includes at least one radioactive measuring device (26).

7. A system according to any one of claims 1 - 6, **characterized in that** the feed system is connected to a production equipment (11) for the production of stock (31) from one or more thick stock components (29) and from filtrate (43), and that part of the production equipment (11), to which part at least one of the feed lines (12, 20) is connected, is a wire pit (23).

8. A system according to any one of claims 1 - 7, **characterized in that** the feed (12) and/or the bypass line (14) for the arrangement of a bypass of the headbox (10) is divided into two pipelines (25.1, 25.2) for measurement, where measuring equipment (15.1, 15.2) has been adapted in the pipeline (25.2) with a smaller cross section.

9. A system according to claim 7, **characterized in that** the feed line (20) of the dilution water system (19) is connected to the part of the production equipment (11) to which the feed line (12) of the stock (31) is connected.

## Patentansprüche

1. Zuführsystem einer Faserbahnmaschine mit:
- einer Zuführleitung (12) zum Liefern von Ganzstoff (31) zu einem Stoffauflaufkasten (10) einer Faserbahnmaschine,
- einer Schaumerzeugungsanlage (13), die in der Zuführleitung (12) angepasst ist für ein Zuführen von einem oder mehreren Mitteln (41) in den Ganzstoff (31) für ein Schaumausbilden,
**dadurch gekennzeichnet, dass** das Zuführsystem des Weiteren Folgendes aufweist:
- eine Messanlage (15.1) für das Bestimmen der Dichte des Ganzstoffs (31), die in der Zuführleitung (12) vor der Schaumerzeugungsanlage (13) angepasst ist, und eine Messanlage (15.2) für das Bestimmen der Dichte des Ganzstoffs (33), die nach der Schaumerzeugungsanlage (13) angepasst ist,
- eine Steueranlage (16), die daran angepasst ist, die Schaumerzeugungsanlage (13) für das Zuführen von einem oder mehreren Mitteln (41) in den Ganzstoff (31) für das Schaumausbilden auf der Basis der Dichtebestimmung zu steuern.

2. System gemäß Anspruch 1, **dadurch gekennzeichnet, dass** das Zuführsystem außerdem eine Bypassleitung (14) aufweist für das Anordnen eines Bypasses des Stoffauflaufkastens (10), wobei an die Bypassleitung (14) die Messanlage (15.2) für das Bestimmen der Dichte des Ganzstoffs (33) nach der Schaumerzeugungsanlage (13) angepasst ist.

3. System gemäß Anspruch 1 oder 2, **dadurch gekennzeichnet, dass** die Zuführleitung (12) eine Pumpe (17) aufweist, und die Messanlage (15.1), die in der Zuführleitung (12) vor der Schaumerzeugungsanlage (13) angepasst ist, zwischen der Pumpe (17) und der Schaumerzeugungsanlage (13) angepasst ist.

4. System gemäß Anspruch 3, **dadurch gekennzeichnet, dass** sie Zuführleitung (12) des Weiteren ein Maschinensieb (18) aufweist, und die Messanlage (15.1), die in der Zuführleitung (12) vor der Schaumerzeugungsanlage (13) angepasst ist, zwischen der Pumpe (17) und dem Maschinensieb (18) angepasst ist.

5. System gemäß einem der Ansprüche 1 bis 4, **dadurch gekennzeichnet, dass** das System des Weiteren ein Verdünnungswassersystem (19) mit seinen Zuführ- und Bypassleitungen (20, 21) aufweist, wobei eine Messanlage (15.3) für ein Messen der Dichte eines Verdünnungswassers in der Bypassleitung (21) des Verdünnungswassersystems (19) angepasst ist.

6. System gemäß einem der Ansprüche 1 bis 5, **dadurch gekennzeichnet, dass** die Messanlage (15.1 - 15.3) zumindest eine radioaktive Messvorrichtung (26) umfasst.

7. System gemäß einem der Ansprüche 1 bis 6, **dadurch gekennzeichnet, dass** das Zuführsystem mit einer Produktionsanlage (11) für die Herstellung von Ganzstoff (31) aus einem oder mehreren DickGanzstoffkomponenten (29) und aus Filtrat (43) verbunden ist, und dass ein Teil der Produktionsanlage (11), wobei mit diesem Teil zumindest eine der Zuführleitungen (12, 20) verbunden ist, eine Siebgrube (23) ist.

8. System gemäß einem der Ansprüche 1 bis 7, **dadurch gekennzeichnet, dass** die Zuführleitung (12) und/oder die Bypassleitung (14) für die Anordnung eines Bypasses des Stoffauflaufkastens (10) in zwei Rohrleitungen (25.1, 25.2) für die Messung geteilt ist, wobei die Messanlage (15.1, 15.2) in der Rohrleitung (25.2) mit einem kleineren Querschnitt angepasst ist.

9. System gemäß Anspruch 7, **dadurch gekennzeichnet, dass** die Zuführleitung (20) des Verdünnungswassersystems (19) mit dem Teil der Produktionsanlage (11) verbunden ist, mit dem die Zuführleitung (12) des Ganzstoffs (31) verbunden ist.

## Revendications

1. Système d'alimentation d'une machine de fabrication de bande fibreuse comprenant :
une ligne d'alimentation (12) pour prendre la pâte (31) vers une caisse d'arrivée (10) d'une machine de fabrication de bande fibreuse,
un équipement de génération de mousse (13) adapté, dans la ligne d'alimentation (12) pour l'alimentation d'un ou de plusieurs agents (41) dans la pâte (31) pour former de la mousse,
**caractérisé en ce que** le système d'alimentation comprend en outre :
un équipement de mesure (15.1) pour la détermination de la densité de la pâte (31) adapté dans la ligne d'alimentation (12) avant l'équipement de génération de mousse (13) et l'équipement de mesure (15.2) pour la détermination de la densité de pâte (33) adapté après l'équipement de génération de mousse (13),
l'équipement de commande (16) qui est adapté pour commander l'équipement de génération de mousse (13) pour l'alimentation d'un ou de plusieurs agents (41) dans la pâte (31) pour former de la mousse sur la base de ladite détermination de densité.

2. Système selon la revendication 1, **caractérisé en ce que** le système d'alimentation comprend également une ligne de dérivation (14) pour un agencement d'une dérivation de la caisse d'arrivée (10), à laquelle ligne de dérivation (14), est adapté l'équipement de mesure (15.2) pour la détermination de la densité de la pâte (33) après l'équipement de génération de mousse (13).

3. Système selon la revendication 1 ou 2, **caractérisé en ce que** la ligne d'alimentation (12) comprend une pompe (17) et l'équipement de mesure (15.1) adapté dans la ligne d'alimentation (12) avant l'équipement de génération de mousse (13), est adapté entre la pompe (17) et l'équipement de génération de mousse (13).

4. Système selon la revendication 3, **caractérisé en ce que** la ligne d'alimentation (12) comprend en outre un crible (18) et l'équipement de mesure (15.1) adapté dans la ligne d'alimentation (12) avant l'équipement de génération de mousse (13), est adapté entre la pompe (17) et le crible (18).

5. Système selon l'une quelconque des revendications 1 à 4, **caractérisé en ce que** le système comprend en outre un système d'eau de dilution (19) avec ses lignes d'alimentation et de dérivation (20, 21), où un équipement de mesure (15.3) pour la mesure de la densité d'une eau de dilution est adapté dans la ligne de dérivation (21) du système d'eau de dilution (19) .

6. Système selon l'une quelconque des revendications 1 à 5, **caractérisé en ce que** l'équipement de mesure (15.1 - 15.3) comprend au moins un dispositif de mesure radioactif (26).

7. Système selon l'une quelconque des revendications 1 à 6, **caractérisé en ce que** le système d'alimentation est raccordé à un équipement de production (11) pour la production d'une pâte (31) à partir d'un ou de plusieurs composants de pâte épais (29) et d'un filtrat (43), et cette partie de l'équipement de production (11), à laquelle une partie d'au moins l'une des lignes d'alimentation (12, 20) est raccordée, est une fosse sous toile (23).

8. Système selon l'une quelconque des revendications 1 à 7, **caractérisé en ce que** la ligne d'alimentation (12) et/ou la ligne de dérivation (14) pour l'agencement d'une dérivation de la caisse d'arrivée (10) est divisée en deux conduites (25.1, 25.2) pour la mesure, où l'équipement de mesure (15.1, 15.2) a été adapté dans la conduite (25.2) avec une section transversale inférieure.

9. Système selon la revendication 7, **caractérisé en ce que** la ligne d'alimentation (20) du système d'eau de dilution (19) est raccordée à la partie de l'équipement de production (11) à laquelle la ligne d'alimentation (12) de la pâte (31) est raccordée.
